# EUROPEAN PATENT SPECIFICATION

(11) **EP 1 789 495 B1**
(45) Date of publication and mention of the grant of the patent: **09.04.2008**
(21) Application number: 05752846.5
(22) Date of filing: 17.06.2005
(51) Int. Cl.: C08L 83/04

(54) **ROOM-TEMPERATURE CURABLE ORGANOPOLYSILOXANE COMPOSITION AND ELECTRICAL OR ELECTRONIC DEVICES**
BEI RAUMTEMPERATUR HÄRTBARE ORGANOPOLYSILOXANZUSAMMENSETZUNG UND ELEKTRISCHE ODER ELEKTRONISCHE VORRICHTUNGEN
COMPOSITION A BASE D'ORGANOPOLYSILOXANE DURCISSABLE A TEMPERATURE AMBIANTE ET DISPOSITIFS ELECTRIQUES OU ELECTRONIQUES

(30) Priority: 09.07.2004 JP 2004203660
(43) Date of publication of application: 30.05.2007
(73) Proprietor: Dow Corning Toray Co., Ltd., Tokyo 100-0005 (JP)
(72) Inventor: MITANI, Osamu Dow Corning Toray Co., Ltd.,, Ichihara-shi, Chiba 299-0108 (JP); ONISHI, Masayuki Dow Corning Toray Co., Ltd.,, Ichihara-shi, Chiba 299-0108 (JP); KODAMA, Harumi Dow Corning Toray Co., Ltd.,, Ichihara-shi, Chiba 299-0108 (JP)
(74) Representative: Kyle, Diana
(86) International application number: PCT/JP2005/011576
(87) International publication number: WO 2006/006371

(56) References cited:
- EP-A- 0 625 548
- US-A- 3 759 867
- PATENT ABSTRACTS OF JAPAN vol. 017, no. 108 (C-1032), 5 March 1993 (1993-03-05) & JP 04 293962 A (TORAY DOW CORNING SILICONE CO LTD), 19 October 1992 (1992-10-19) cited in the application
- PATENT ABSTRACTS OF JAPAN vol. 007, no. 285 (C-201), 20 December 1983 (1983-12-20) & JP 58 162660 A (TORAY SILICONE KK), 27 September 1983 (1983-09-27)

## Description

### Technical Field

The present invention relates to a room-temperature curable organopolysiloxane composition and to electrical and electronic devices utilizing the aforementioned composition. More specifically, the invention relates to a room-temperature curable organopolysiloxane composition that is strongly adherent to a substrate when cured while in contact with the substrate and that can form a cured product readily peelable from the substrate at the interface, even after a long period of time. The invention also relates to electrical or electronic devices that have electrical circuits or electrodes sealed or coated by a cured body of the aforementioned composition and that are suitable for repair or recycling.

### Background Art

Since room-temperature curable organopolysiloxane compositions that are cured due to a dealcoholation condensation type reaction with the moisture in air are able to adhere to substrates, they find application as sealants and coatings for those electrical circuits or electrodes to which processes associated with heating are undesirable. However, as the cured body of the composition strongly adheres to the surface of the associated electrical circuit or electrode, the coating or sealant cannot be easily removed from the coated or sealed surface when the electrical or electronic device that contains the circuit or electrode has to be repaired or recycled.

In view of the above, it has been proposed to use a sealing or coating agent, for electrical circuits or electrodes of repairable and recyclable electrical devices, in the form of a room-temperature curable organopolysiloxane composition capable of forming a cured body that adheres to the substrate with a sufficient adhesion strength and at the same time can be peelable from the substrate at the interface. This composition is comprised of a diorganopolysiloxane having both molecular terminals capped with trialkoxysilyl groups, diorganodialkoxysilane, and a titanium chelate catalyst (see Japanese Patent Application Laid-Open No. Hei 4-293962).

It has been found, however, that although the aforementioned composition easily adheres to substrates made from such materials as glass, epoxy resin, etc., after a long period of time the cured body formed from the composition changes the adhesion properties so that it cannot be easily and completely separated from the substrate at the interface.

It is an object of the present invention to provide a room-temperature curable organopolysiloxane composition that during curing adheres to a substrate with a sufficient strength but allows separation of a cured body of the composition from the substrate at the interface even after a long period of time. It is another object to provide electrical or electronic devices that allow separation of the aforementioned cured body of the composition and therefore are suitable for repair or recycling.

### Disclosure of Invention

The room-temperature curable organopolysiloxane composition of the invention comprises:
(A) 100 parts by weight of an organopolysiloxane that has a viscosity at 25°C of 100 to 1,000,000 mPa·s and contains in each molecule at least two trialkoxysilyl-containing groups that are bonded to silicon atoms of the molecular chain and expressed by the following general formula:

   -X -Si(OR¹)₃

   (where R¹ designates the same or different alkyl groups or alkoxyalkyl groups, and X designates an oxy group or alkylene group);
(B) 0.5 to 30 parts by weight of a diorganodialkoxysilane represented by the formula given below or a product of partial hydrolyzation of said diorganodialkoxysilane:

   R²₂Si(OR³)₂

   (where R² designates the same or different substituted or unsubstituted monovalent hydrocarbon groups, and R³ designates the same or different alkyl groups or alkoxyalkyl groups);
(C) 0.1 to 50 parts by weight of an organopolysiloxane that has a viscosity at 25°C of 10 to 1,000,000 mPa·s, contains at least 1 silicon-bonded phenyl group in each molecule, and is free of alkoxy groups; and
(D) 0.1 to 10 parts by weight of a titanium chelate catalyst.

Electrical or electronic devices of the invention are those that have electrical circuits or electrodes sealed or coated with a cured body of the aforementioned room-temperature curable organopolysiloxane composition.

### Effects of Invention

During curing, the room-temperature curable organopolysiloxane composition adheres to a substrate with a sufficient strength but allows separation of a cured body of the composition from the substrate at the interface even after a long period of time. On the other hand, electrical or electronic devices of the invention allow separation of the aforementioned cured body of the composition and therefore are suitable for repair or recycling.

### Brief Description of the Drawings

Figure 1 contains a sectional view of the liquid-crystal panel used in the practical examples.

Figure 2 contains a sectional view of the liquid-crystal panel, wherein during production the glass substrate near the liquid crystal panel and the terminal electrode (ITO electrode) are sealed with a cured body of the room-temperature curable organopolysiloxane composition of the invention.
Reference numerals
- 1: liquid-crystal panel
- 2: glass substrate
- 3: terminal electrode (ITO electrode)
- 4: output lead
- 5: cured body of the room-temperature curable organopolysiloxane composition

### Detailed Description of the Invention

The following is a detailed description of the room-temperature curable organopolysiloxane composition of the invention.

Component (A) is one of the main components of the room-temperature curable organopolysiloxane composition of the invention. This component contains in each molecule at least two trialkoxysilyl-containing groups that are bonded to silicon atoms of the molecular chain and expressed by the following general formula:

-X -Si(OR¹)₃.

In the above formula, R¹ designates the same or different alkyl groups or alkoxyalkyl groups. The alkyl groups designated by R¹ can be exemplified by methyl, ethyl, and propyl groups. The alkoxyalkyl groups designated by R¹ can be exemplified by methoxymethyl groups and methoxyethyl groups. In the above formula, X designates oxy groups or alkylene groups. The alkylene groups of X can be exemplified by ethylene, propylene, and butylenes groups. Examples of the aforementioned trialkoxysilyl-containing groups are the following: trimethoxysiloxy groups, triethoxysiloxy groups, dimethoxyethoxysiloxy groups, methoxydiethoxysiloxy groups, triisopropoxysiloxy groups tri(methoxyethoxy)siloxy groups, or similar trialkoxysiloxy groups; trimethoxysilylethyl groups, trimethoxysilylpropyl groups, triethoxysilylethyl groups, or similar trialkoxysilylalkyl groups. Most preferable of the above are trimethoxysiloxy groups and trimethoxysilylethyl groups. There are no special restrictions with regard to the bonding position of the aforementioned trialkoxysilyl-containing groups. For example, they can be bonded to silicon atoms at the molecular terminals and/or to silicon atoms along the molecular chain. Most preferably, component (A) is a diorganopolysiloxane with trialkoxysilyl-containing groups bonded to silicon atoms on both molecular terminals. Groups other than trialkoxysilyl-containing groups bonded to silicon atoms may be the following: methyl, ethyl, propyl, butyl, hexyl, octyl, decyl, octadecyl, or similar alkyl groups; cyclopentyl, cyclohexyl, or similar cycloalkyl groups; vinyl, allyl, butenyl, hexenyl, or similar alkenyl groups; phenyl, tolyl, naphthyl, or similar aryl groups; benzyl, phenethyl, or similar aralkyl groups; chloromethyl, 3-chloropropyl, 3,3,3-trifluoropropyl, or other substituted or unsubstituted monovalent hydrocarbon groups. Most preferable from the point of view of availability are methyl and phenyl groups. There are no special restrictions with regard to the molecular structure of the aforementioned organopolysiloxane. For example, it may have a linear, partially-branched linear, branched, or cyclic molecular structure, of which the linear molecular structure is preferable. This component may have a viscosity at 25°C within the range of 100 to 1,000,000 mPa·s, preferably within the range of 100 to 100,000 mPa·s. If the viscosity is below the lower recommended limit, this will impair mechanical properties of the cured body of the composition. If, on the other hand, the viscosity exceeds the upper recommended limit, the composition will be difficult to handle and become unsuitable for use as a sealing or potting agent.

Component (B) is a curing agent of the composition. Component (B) is a diorganodialkoxysilane represented by the formula biven below or a product of partial hydrolyzation thereof:

R²₂Si(OR³)₂.

In the formula, R² designates the same or different substituted or unsubstituted monovalent hydrocarbon groups, such as methyl, ethyl, propyl, butyl, hexyl, octyl, decyl, octadecyl, or similar alkyl groups; cyclopentyl, cyclohexyl, or similar cycloalkyl groups; vinyl, allyl, butenyl, hexenyl, or similar alkenyl groups; phenyl, tolyl, naphthyl, or similar aryl groups; benzyl, phenethyl, or similar aralkyl groups; chloromethyl, 3-chloropropyl, 3,3,3-trifluoropropyl, or other substituted or unsubstituted monovalent hydrocarbon groups. Most preferable are methyl and phenyl groups. In the above formula, R³ designates the same or different alkyl groups or alkoxyalkyl groups that may be exemplified by the same groups as defined above for R¹. Most preferable from the point of view of composition curability are methyl groups.

The following are specific examples of the aforementioned diorganodialkoxysilane: dimethyldimethoxysilane, dimethyldiethoxysilane, dimethyldi(methoxyethoxy)silane, methylpropyldimethoxysilane, methylvinyldiethoxysilane, diethyldimethoxysilane, divinyldimethoxysilane, phenylmethyldimethoxysilane, diphenyldimethoxysilane, and mixture of two or more of the above compounds. Component (B) may also be represented by diorganodialkoxysilanes, products of their partial hydrolyzation and condensation, and mixture of two or more of the above.

Component (B) can be used in an amount of 0.5 to 30 parts by weight, preferably, 1 to 15 parts by weight, per 100 parts by weight of component (A). If component (B) is used in the amount less than the lower recommended limit, the composition will not be sufficiently cured, or its storage stability as a one-pack liquid will be reduced. If, on the other hand, the amount of added component (B) exceeds the upper recommended level, this will either delay curing of the composition, or impair mechanical properties of a cured body obtained by curing the composition.

Component (C) is the one that improves tightness of contact between the composition and the substrate during curing and imparts to the cured body of the composition a property of peelability at the interface, even after a long period of time. Component (C) is an organopolysiloxane that contains at least one silicon-bonded phenyl group in each molecule, and is free of alkoxy groups. Groups other than phenyl groups that can be bonded to silicone atoms are the following: methyl, ethyl, propyl, butyl, hexyl, octyl, decyl, octadecyl, or similar alkyl groups; cyclopentyl, cyclohexyl, or similar cycloalkyl groups; vinyl, allyl, butenyl, hexenyl, or similar alkenyl groups; tolyl, naphthyl or similar aryl groups, except for phenyl groups; benzyl, phenethyl groups, or similar aralkyl groups; chloromethyl, 3-chloropropyl, 3,3,3-trifluoropropyl, or other substituted or unsubstituted monovalent hydrocarbon groups. Most preferable from the point of view of availability are methyl. There are no special restrictions with regard to the molecular structure of the aforementioned organopolysiloxane of component (C). For example, it may have a linear, partially-branched linear, branched, or cyclic molecular structure, of which the linear molecular structure is preferable. This component may have a viscosity at 25°C within the range of 10 to 1,000,000 mPa·s, preferably within the range of 50 to 100,000 mPa·s. If the viscosity is below the lower recommended limit, this will cause a tendency to bleeding from the cured body of the composition. If, on the other hand, the viscosity exceeds the upper recommended limit, the composition will be difficult to handle and become unsuitable for use as a sealing or potting agent.

The organopolysiloxane of component (C) can be represented, e.g., by the following general formula: 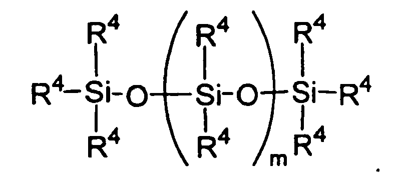 In the formula, R⁴ may be the same or different substituted or unsubstituted monovalent hydrocarbon groups that can be exemplified by the same substituted or unsubstituted monovalent hydrocarbon groups as have been defined for R². At least one of R⁴'s should be phenyl groups. In the above formula, "m" is an integer that provides viscosity of the aforementioned organopolysiloxane at 25°C within the range of 10 to 1,000,000 mPa·s, preferably, within the range of 50 to 100,000 mPa·s.

The organopolysiloxane of component (C) can be exemplified by compounds of the following formulae, where "m" and "n" are positive integers:

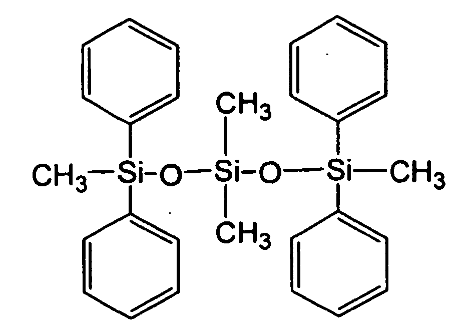

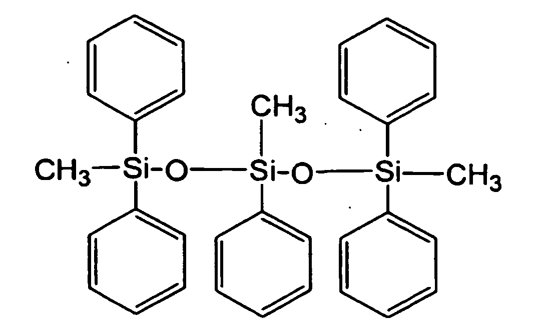

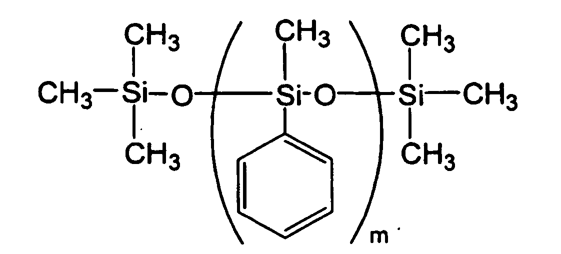

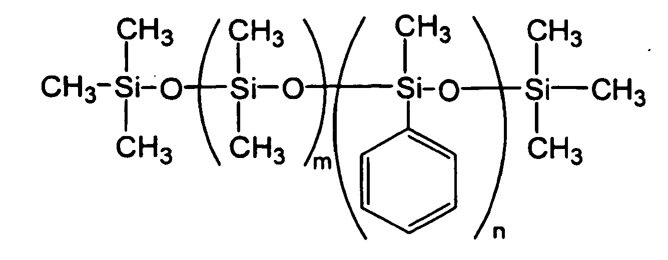

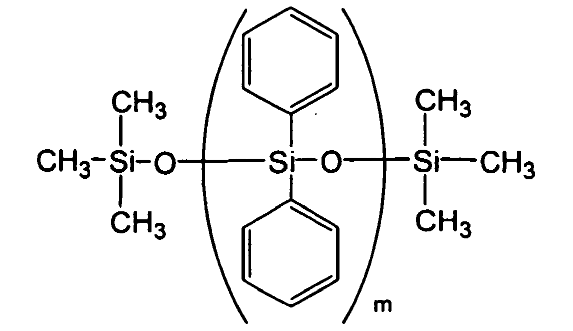

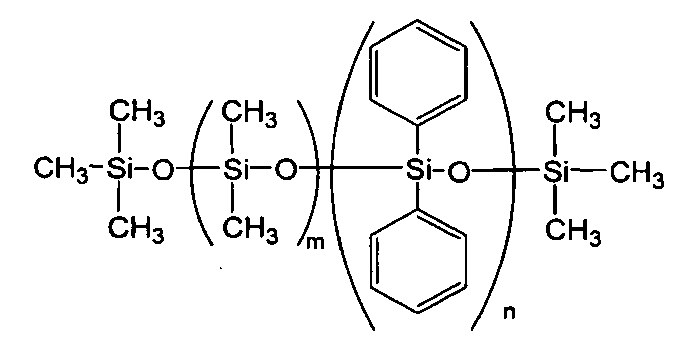

It is recommended to add component (C) in the amount of 0.1 to 50 parts by weight, preferably, 1 to 15 parts by weight, per 100 parts by weight of component (A). If component (C) is added in the amount less than the lower recommended limit, it would be relatively easy to attach the cured body to a glass, epoxy-resin, or a similar substrate, but it would be difficult to completely separate the cured body from the substrate at the interface. On the other hand, if the added amount of the component (C) exceeds the upper recommended limit, this will either cause a tendency to bleeding from the cured body of the composition, make the cured body sticky, or impair its mechanical properties.

The titanium chelate catalyst that constitutes component (D) is used for acceleration of curing of the composition. This titanium chelate catalyst can be represented by titanium dimethoxybis (methylacetoacetate), titanium diisopropoxybis (acetylacetonate), titanium diisopropoxybis (ethylacetoacetate), titanium diisopropoxybis ( methylacetoacetate), and titanium dibutoxybis (ethylacetoacetate).

Component (D) can be added in the amount of 0.1 to 10 parts by weight, preferably, 0.3 to 6 parts by weight, per 100 parts by weight of component (A). If component (D) is added in the amount less than the lower recommended limit, the effect of curing acceleration will be insufficient. If, on the other hand, it is added in the amount exceeding the upper recommended limit, this will impair storage stability of the composition.

In order to improve flowability of the composition or mechanical properties of a cured body obtained from the composition, the latter is additionally combined with component (E) having BET specific surface of at least 50 m²/g, such as an untreated fine silica powder, or a fine silica powder surface-treated with a silane compound, silazane compound, or with a siloxane of low degree of polymerization. There are no special restrictions with regard to the amounts in which component (E) can be added. It is preferable, however, to add this component in the amount of 1 to 30 parts by weight per 100 parts by weight of component (A).

Within the limits that are not conflicting with the objects of the invention, in addition to the aforementioned component (E) the composition can be combined with fillers, such as fine silica powder other than component (E), precipitated silica, quartz, calcium carbonate, titanium dioxide, diatomaceous earth, alumina, magnesia, zinc oxide, colloidal calcium carbonate, carbon black, etc., or the same fillers surface treated with silane compounds, silazane compounds, or siloxanes of low degree of polymerization; as well as organic solvents, anti-corrosive agents, flame retardants, heat-resistant agents, plasticizers, thixotropy enhancing agents, pigments, etc.

There are no special restrictions with regard to methods that can be used for preparation of the composition. The composition is prepared by mixing components (A) to (D), if necessary, with the addition of other arbitrary components. When the composition is stored as a one-liquid package, the composition should be maintained, during mixing with component (D) or after mixing with component (D), under conditions isolated from moisture. When the composition is stored as a two-liquid package, components (A) and (D) should be stored separately.

Since the composition of the invention is curable under the effect of moisture in air even at room temperature, provides a sufficiently tight contact with the surface of a substrate during curing, and allows separation of the cured body at the interface after curing, it is suitable for use as a sealing and coating agent for protecting electrical circuits or electrodes, for which heating is undesirable, against contamination and contact with humid air.

The following description will relate to electrical or electronic devices of the present invention. The electrical or electronic devices of the invention are those that contain electrical circuits or electrodes sealed or coated with a cured body of the above-described room-temperature curable organopolysiloxane composition. Such devices may be represented by plasma displays, liquid-crystal displays, and organic electroluminescence displays. Substrates of electrical circuits of such devices may be made from glass, epoxy resin, polyimide resin, phenol resin, or ceramics. The electrodes can be made from copper, aluminium, gold, or similar electrode metals; or may comprise film-type metal oxide electrodes such as ITO (Indium Tin Oxide). In particular, the electrical or electronic devices most suitable for the purposes of the invention are those that require removal of the cured bodies of the aforementioned composition from the electrical circuits or electrodes prior to device repair or recycling.

There are no special restrictions with regard to methods of coating or sealing of the electrical circuits or electrode of the electrical or electronic devices with cured bodies of the aforementioned composition. For example; the composition can be applied onto a circuit or electrode with the use of a dispenser, scraper, or brush. Prior to application of the composition, it is recommended to clean the surfaces of the electrical circuits, electrodes, and the surrounding areas. There are no special restrictions with regard to the thickness of the composition layer applied onto the electrical circuit or electrode, but is it recommended to have this thickness within the range of 10 µm to 5 mm. If the thickness of the coating layer is below the recommended lower limit, the obtained cured body will not provide sufficient protection of the electrical circuit or electrode against contamination or contact with moisture of air. If, on the other hand, the thickness exceeds the recommended upper layer, this will not noticeably improve the effect of protection against contamination or contact with moisture. There are no special restrictions with regard to curing conditions of the composition. Although the composition can be cured at room temperature, heating may accelerate the curing process. In case of curing at room temperature, the coated product may be held intact from several minutes to one week.

### Examples

The room-temperature curable organopolysiloxane composition of the invention and electrical and electronic devices of the invention utilizing the aforementioned composition will now be described in more detail with reference to practical and comparative examples. The viscosity values given in the examples were measured at 25°C.

### [Practical Example 1]

100 parts by weight of a linear-chained dimethylpolysiloxane having a viscosity of 2,000 mPa·s and containing trimethoxysiloxy groups of formula: (CH₃O)₃SiO-bonded to silicon atoms on both molecular terminals and 15 parts by weight of fumed silica, surface coated with hexamethyldisilazane and having BET specific surface of 110 m²/g, were mixed at room temperature for 30 min. under a reduced pressure of 40 mmHg. The mixture was then combined with 4 parts by weight of dimethyldimethoxysilane, 2 parts by weight of titanium diisopropoxybis (ethylacetoacetate), and 5 parts by weight of a copolymer of dimethylsiloxane and methylphenylsiloxane having a viscosity of 100 mPa·s and represented by the following formula: 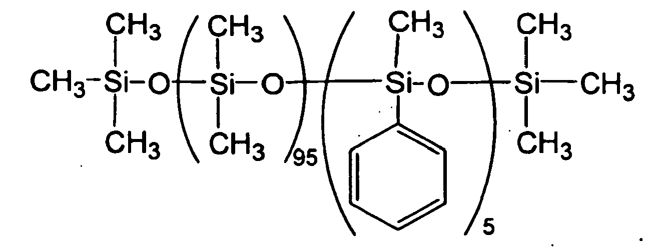 The components were uniformly mixed under conditions isolated from moisture to produce a room-temperature curable organopolysiloxane composition.

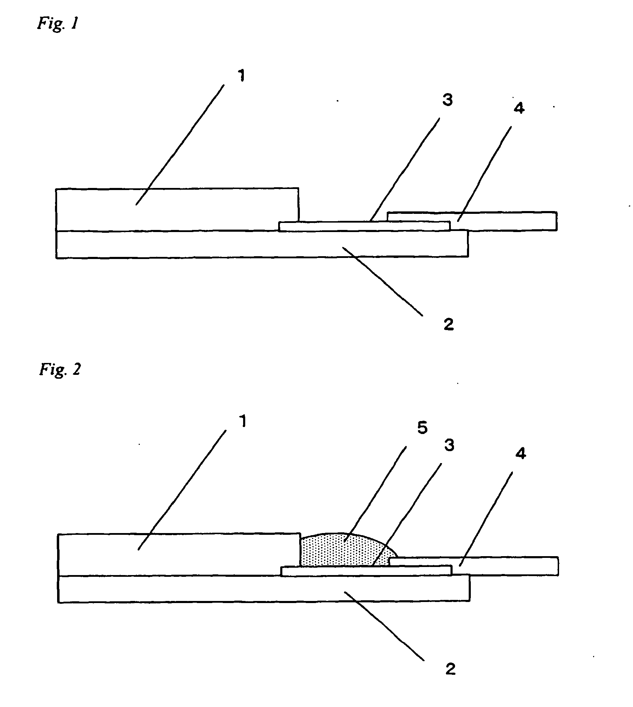

The obtained room-temperature curable organopolysiloxane composition was applied in the form of a 2 mm wide and 0.5 mm thick layer onto the surfaces of a glass substrate near the periphery of the liquid-crystal panel and a terminal electrode (ITO electrode) shown in Fig. 1, and then the coating was cured by keeping it intact for 7 days at a temperature of 20°C and at a relative humidity of 55%. The cured body had a rubber-like state and sufficiently firmly adhered to the glass substrate of the liquid-crystal panel and the terminal electrode. The property of separation of the cured body from the glass substrate and terminal electrode was evaluated in terms of an interface peeling index (%). This index was determined as the ratio of the area separated at the interface to the entire area of adherence of the cured body. The aforementioned ratio was determined for conditions of peeling of the cured body from the substrate directly after curing following 7 days of maintaining at 20°C and at relative humidity of 55% and for conditions following 90 days of maintaining at 20°C and at relative humidity of 55%. The results are shown in Table 1.

### [Practical Example 2]

The room-temperature curable organopolysiloxane was prepared by the same method as in Practical Example 1, with the exception that 5 parts by weight of a 1,3,3,5-tetramethyl-1,1,5,5-tetraphenyltrisiloxane represented by the following formula: 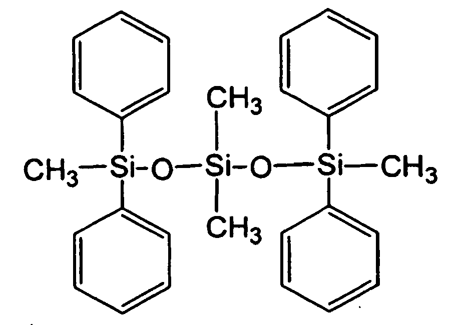 were used instead of the copolymer of methylphenylsiloxane and dimethylsiloxane. Similar to Practical Example 1, the composition was cured by maintaining it at 20°C and relative humidity of 55% for 7 days after application onto the terminal electrode near the periphery of the liquid-crystal panel. The cured body had a rubber-like state and sufficiently firmly adhered to the glass substrate of the liquid-crystal panel and the terminal electrode. The property of separation of the cured body at interface was evaluated by the same method as in Practical Example 1. The results are shown in Table 1.

### [Comparative Example 1]

The room-temperature curable organopolysiloxane was prepared by the same method as in Practical Example 1, with the exception that the copolymer of methylphenylsiloxane and dimethylsiloxane was not added. Similar to Practical Example 1, the composition was cured by maintaining it at 20°C and relative humidity of 55% for 7 days after application onto the terminal electrode near the periphery of the liquid-crystal panel. The cured body had a rubber-like state and sufficiently firmly adhered to the glass substrate of the liquid-crystal panel and the terminal electrode. The property of separation of the cured body at interface was evaluated by the same method as in Practical Example 1. The results are shown in Table 1.

### [Comparative Example 2]

The room-temperature curable organopolysiloxane was prepared by the same method as in Practical Example 1, with the exception that 100 parts by weight of a dimethylpolysiloxane capped at both molecular terminals with trimethylsiloxy groups and having a viscosity of 100 mPa·s were used instead of the copolymer of methylphenylsiloxane and dimethylsiloxane. Similar to Practical Example 1, the composition was cured by maintaining it at 20°C and relative humidity of 55% for 7 days after application onto the terminal electrode near the periphery of the liquid-crystal panel. The cured body had a rubber-like state and sufficiently firmly adhered to the glass substrate of the liquid-crystal panel and the terminal electrode. The property of separation of the cured body at interface was evaluated by the same method as in Practical Example 1. The results are shown in Table 1.

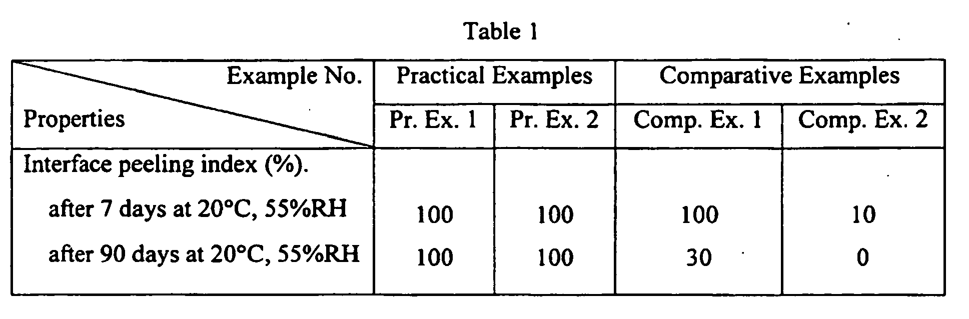

### Industrial Applicability

Since the room-temperature curable organopolysiloxane composition of the invention adheres during curing to a substrate with a sufficient strength but allows separation of the cured body of the composition from the substrate at the interface even after a long period of time, the composition can be used as a sealing or coating agent for protecting electrical circuits or electrodes of recyclable or repairable electrical or electronic devices from contamination and contact with humid air. Furthermore, the organopolysiloxane composition of the invention can be used as a coating or a temporary attachment agent for fiber, glass, plastic products, etc. Since the cured body of the composition that is used for sealing or coating the electrical circuits or electrodes can be separated from the circuits or electrodes even after a long period of time, the composition is suitable for use in conjunction with repairable or recyclable plasma displays, liquid-crystal displays, organic and electroluminescence displays.

## Claims

1. A room-temperature curable organopolysiloxane composition comprising at least the following components:
(A) 100 parts by weight of an organopolysiloxane that has a viscosity at 25°C of 100 to 1,000,000 mPa·s and contains in each molecule at least two trialkoxysilyl-containing groups that are bonded to silicon atoms of the molecular chain and expressed by the following general formula:
-X -Si(OR¹)₃
(where R¹ designates the same or different alkyl groups or alkoxyalkyl groups, and X designates an oxy group or alkylene group);
(B) 0.5 to 30 parts by weight of diorganodialkoxysilane represented by the formula given below or a product of partial hydrolyzation of said diorganodialkoxysilane:
R²₂Si(OR³)₂
(where R² designates the same or different substituted or unsubstituted monovalent hydrocarbon groups, and R³ designates the same or different alkyl groups or alkoxyalkyl groups);
(C) 0.1 to 50 parts by weight of organopolysiloxane that has a viscosity at 25°C of 10 to 1,000,000 mPa·s, contains at least 1 silicon-bonded phenyl group in each molecule, and is free of alkoxy groups; and
(D) 0.1 to 10 parts by weight of a titanium chelate catalyst.

2. The room-temperature curable organopolysiloxane composition of Claim 1, wherein component (A) is a diorganopolysiloxane having trialkoxysilyl-containing groups bonded to silicon atoms on the molecular terminals.

3. The room-temperature curable organopolysiloxane composition of Claim 1, wherein component (C) is an organopolysiloxane represented by the following general formula: 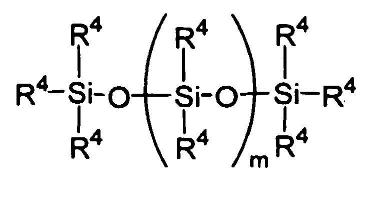 (where R⁴ designates the same or different substituted or unsubstituted monovalent hydrocarbon groups, at least one R⁴ is a phenyl group, and "m" is an integer that provides a viscosity at 25°C within the range of 10 to 1,000,000 mPa·s).

4. The room-temperature curable organopolysiloxane composition of Claim 1, further comprising component (E), which is a fine silica powder that has BET specific surface of at least 50 m²/g and is used in an amount of 1 to 30 parts by weight per 100 parts by weight of component (A).

5. The room-temperature curable organopolysiloxane composition according to any of Claims from 1 to 4, wherein said composition is used as a sealing agent or coating agent for electrical circuits or electrodes.

6. Electrical and electronic devices having electrical circuits or electrodes sealed or coated with a cured body of the room-temperature curable organopolysiloxane composition according to any of Claims from 1 to 4.

## Patentansprüche

1. Eine bei Raumtemperatur härtbare Organopolysiloxanzusammensetzung, enthaltend wenigstens die folgenden Komponenten:
(A) 100 Gewichtsteile eines Organopolysiloxans, das eine Viskosität bei 25°C von 100 bis 1.000.000 mPa·s hat und in jedem Molekül wenigstens zwei trialkoxysilylhaltige Gruppen, die an Siliciumatome der Molekülkette gebunden sind und durch die folgende allgemeine Formel dargestellt werden:
-X-Si(OR¹)₃
(worin R¹ gleiche oder unterschiedliche Alkylgruppen oder Alkoxyalkylgruppen bezeichnet und X eine Oxygruppe oder Alkylengruppe bezeichnet), enthält;
(B) 0,5 bis 30 Gewichtsteile eines Diorganodialkoxysilans, dargestellt durch die Formel, die unten angegeben ist, oder ein Produkt einer partiellen Hydrolyse dieses Diorganodialkoxysilans:
R²₂Si(OR³)₂
(worin R² gleiche oder unterschiedliche substituierte oder unsubstituierte einbindige Kohlenwasserstoffgruppen bezeichnet und R³ gleiche oder unterschiedliche Alkylgruppen oder Alkoxyalkylgruppen bezeichnet);
(C) 0,1 bis 50 Gewichtsteile eines Organopolysiloxans, das eine Viskosität bei 25°C von 10 bis 1.000.000 mPa·s hat, wenigstens eine siliciumgebundene Phenylgruppe in jedem Molekül enthält und frei von Alkoxygruppen ist; und
(D) 0,1 bis 10 Gewichtsteile eines Titanchelatkatalysators.

2. Die bei Raumtemperatur härtbare Organopolysiloxanzusammensetzung nach Anspruch 1, wobei Komponente (A) ein Diorganopolysiloxan mit trialkoxysilylhaltigen Gruppen ist, die an Siliciumatome an den Molekülenden gebunden sind.

3. Die bei Raumtemperatur härtbare Organopolysiloxanzusammensetzung nach Anspruch 1, wobei die Komponente (C) ein Organopolysiloxan ist, dargestellt durch die folgende allgemeine Formel: 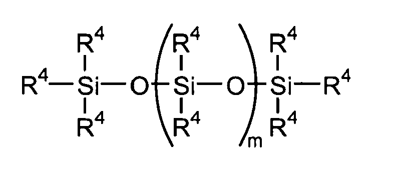 (worin R⁴ gleiche oder unterschiedliche substituierte oder unsubstituierte einbindige Kohlenwasserstoffgruppen bezeichnet, wenigstens ein R⁴ eine Phenylgruppe ist und "m" eine ganze Zahl ist, die eine Viskosität bei 25°C innerhalb des Bereiches von 10 bis 1.000.000 mPa·s ergibt).

4. Die bei Raumtemperatur härtbare Organopolysiloxanzusammensetzung nach Anspruch 1, außerdem enthaltend Komponente (E), welche ein feines Siliciumdioxidpulver ist, das eine spezifische BET-Oberfläche von wenigstens 50 m²/g hat und in einer Menge von 1 bis 30 Gewichtsteilen pro 100 Gewichtsteile der Komponente (A) verwendet wird.

5. Die bei Raumtemperatur härtbare Organopolysiloxanzusammensetzung nach einem der Ansprüche 1 bis 4, wobei diese Zusammensetzung als ein Versiegelungsmittel oder Beschichtungsmittel für elektrische Schaltungen oder Elektroden verwendet wird.

6. Elektrische oder elektronische Vorrichtungen, die elektrische Schaltungen oder Elektroden enthalten, welche mit einer ausgehärteten Struktur der bei Raumtemperatur härtbaren Organopolysiloxanzusammensetzung nach einem der Ansprüche 1 bis 4 versiegelt oder beschichtet sind.

## Revendications

1. Composition à base d'organopolysiloxane durcissable à température ambiante comprenant au moins les composants suivants :
(A) 100 parties en poids d'un organopolysiloxane dont la viscosité à 25°C va de 100 à 1 000 000 mPa·s et qui contient dans chaque molécule au moins deux groupes contenant du trialcoxysilyle qui sont liés à des atomes de silicium de la chaîne moléculaire et exprimés par la formule générale suivante :
-X-Si(OR¹)₃
(dans laquelle R¹ désigne des groupes alkyle ou des groupes alcoxyalkyle identiques ou différents, et X désigne un groupe oxy ou un groupe alkylène) ;
(B) de 0,5 à 30 parties en poids d'un diorganodialcoxysilane représenté par la formule indiquée ci-dessous ou d'un produit d'hydrolysation partielle dudit diorganodialcoxysilane :
R²₂Si (OR³)₂
(dans laquelle R² désigne des groupes hydrocarbonés monovalents substitués ou non substitués identiques ou différents, et R³ désigne des groupes alkyle ou des groupes alcoxyalkyle identiques ou différents) ;
(C) de 0,1 à 50 parties en poids d'un organopolysiloxane dont la viscosité à 25°C va de 10 à 1 000 000 mPa·s, qui contient au moins 1 groupe phényle lié à un atome de silicium dans chaque molécule, et est dépourvu de groupes alcoxy ; et
(D) de 0,1 à 10 parties en poids d'un catalyseur à base de chélate de titane.

2. Composition à base d'organopolysiloxane durcissable à température ambiante selon la revendication 1, dans laquelle le composant (A) est un diorganopolysiloxane possédant des groupes contenant du trialcoxysilyle liés à des atomes de silicium aux terminaisons moléculaires.

3. Composition à base d'organopolysiloxane durcissable à température ambiante selon la revendication 1, dans laquelle le composant (C) est un organopolysiloxane représenté par la formule générale suivante : 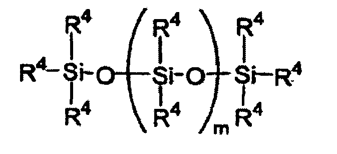 (dans laquelle R⁴ désigne des groupes hydrocarbonés monovalents substitués ou non substitués identiques ou différents, au moins un R⁴ est un groupe phényle, et « m » est un nombre entier permettant d'obtenir une viscosité à 25°C située dans la plage allant de 10 à 1 000 000 mPa·s).

4. Composition à base d'organopolysiloxane durcissable à température ambiante selon la revendication 1, comprenant en outre le composant (E), constitué par une fine poudre de silice dont la surface spécifique BET est d'au moins 50 m²/g et utilisé à raison de 1 à 30 parties en poids pour 100 parties en poids de composant (A).

5. Composition à base d'organopolysiloxane durcissable à température ambiante selon l'une quelconque des revendications 1 à 4, ladite composition étant utilisée comme agent d'étanchéification ou agent d'enrobage pour circuits électriques ou électrodes.

6. Dispositifs électriques et électroniques possédant des circuits électriques ou électrodes étanchéifiés ou enrobés par un corps durci constitué par la composition à base d'organopolysiloxane durcissable à température ambiante selon l'une quelconque des revendications 1 à 4.
